Europäisches Patentamt

European Patent Office

Office européen des brevets

(11) Publication number: **0 033 031**
**B1**

(12) **EUROPEAN PATENT SPECIFICATION**

(45) Date of publication of patent specification: **14.11.84**

(21) Application number: **80304329.8**

(22) Date of filing: **02.12.80**

(51) Int. Cl.³: **H 01 R 13/52, H 01 R 13/58**

(54) **Sealed electrical connector assembly.**

(30) Priority: **26.12.79 US 106813**

(43) Date of publication of application:
**05.08.81 Bulletin 81/31**

(45) Publication of the grant of the patent:
**14.11.84 Bulletin 84/46**

(84) Designated Contracting States:
**AT BE CH DE FR GB IT LI NL SE**

(56) References cited:
**DE-A-2 728 025**
**DE-C- 283 033**
**FR-A-2 082 828**
**FR-A-2 095 365**
**FR-A-2 289 054**
**US-A-3 430 187**
**US-A-3 739 076**

(73) Proprietor: **AMP INCORPORATED**
**P.O. Box 3608 449 Eisenhower Boulevard**
**Harrisburg Pennsylvania 17105 (US)**

(72) Inventor: **Bunnell, Edward Dennman**
**3435 County Road 70**
**Palm Harbor Florida 33560 (US)**
Inventor: **Sotolongo, Thomas J.**
**855 South Bayway Boulevard**
**Clearwater Beach Florida 33515 (US)**

(74) Representative: **Gray, Robin Oliver et al**
**BARON & WARREN 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a sealed electrical connector assembly, and particularly but not exclusively to such an assembly for use in establishing an electrical connection to a photovoltaic generator panel, normally known as a solar panel.

In U.S.—A—3 739 076 there is disclosed an electrical connector assembly, for use in establishing an electrical connection to a photovoltaic generator panel, comprising an insulating receptacle housing for mounting over a male terminal on the panel; an insulating plug housing matable with the receptacle housing; a terminal receivable in the housing with a conductor connected to the terminal extending out of the housing; a sealing member locatable within the housing with a conductor connected to the terminal received in the housing passing therethrough; and a cap member having latching means co-operable with complementary latching means on the housing to latch the cap member to the housing to retain the sealing member in the housing, the latching means serving to latch the cap member to the housing either such that the sealing member is uncompressed and the conductor passes freely through the sealing member, or such that the sealing member is compressed between the cap member and housing and into sealing engagement with the conductor, the latching means being operable to secure the cap member to the housing in either a first predetermined position in which the sealing member is uncompressed, or a second predetermined position in which the sealing member is compressed, the cap member being movable between the first and second positions by movement axially of the housing relative to the housing.

In this known assembly the latching means in the housing and cap member comprises cooperating screw threads which make the assembly relatively difficult and expensive to manufacture, and which require rotation of the cap member relative to the housing and conductor to effect sealing, such relative rotation possibly causing damage to the sealing member and/or the conductor.

Due to the normal location of a solar panel it is normally essential for connector assemblies used to make electrical connections thereto to be totally environmentally sealed, with the connections being made in a simple manner.

Further, the output terminals of a solar panel are normally permanently live, and thus it is essential for any terminals to be connected to an output terminal to be protected from contact to prevent the possibility of an electric shock to a person making or breaking a connection to an output terminal.

According to this invention an assembly as set out above is characterised in that the plug housing has a pair of arms which shroud a receptacle portion of the terminal received in the plug housing, sealing means is provided between the receptacle and plug housing and operative when mated, and the cap member and latching means are operable between the first and second positions by movement of the cap member axially and without rotation relative to the housing.

The assembly of this invention has the advantage that it is totally environmentally sealed while the arms of the plug housing shroud the receptacle terminal and thus prevent accidental manual contact with the terminal when the plug member is being mated or unmated. A further advantage is that this sealing and shrouding can be provided in an assembly having only three normally separate parts, namely the housing, the terminal, and the plug member having the sealing member and the cap member secured thereto, while still allowing for easy assembly of the plug member and terminal to the conductor.

Preferably the latching means comprises a pair of axially spaced latching projections on each of two opposite sides of the housing and a pair of axially spaced holes on each of two opposite sides of the cap member.

FR—A—2 289 054 discloses an electrical connector comprising a cap and housing with latching means, where in a first position of latching, projections engage holes and in a second position of latching the projections engage second holes by movement only axially of the cap relative to the housing.

An electrical connector assembly according to this invention will now be described by way of example with reference to the drawings, in which:—

Figure 1 is an exploded perspective view of the assembly;

Figure 2 is an exploded perspective view of the plug member of the assembly;

Figure 3 is a sectioned perspective view of a photo-voltaic generator panel with an assembly according to the invention mounted thereon and another assembly to be mounted thereon;

Figure 4 is a section view on the line IV—IV in Figure 3; and

Figure 5 shows part of Figure 4 but with the plug member in another condition.

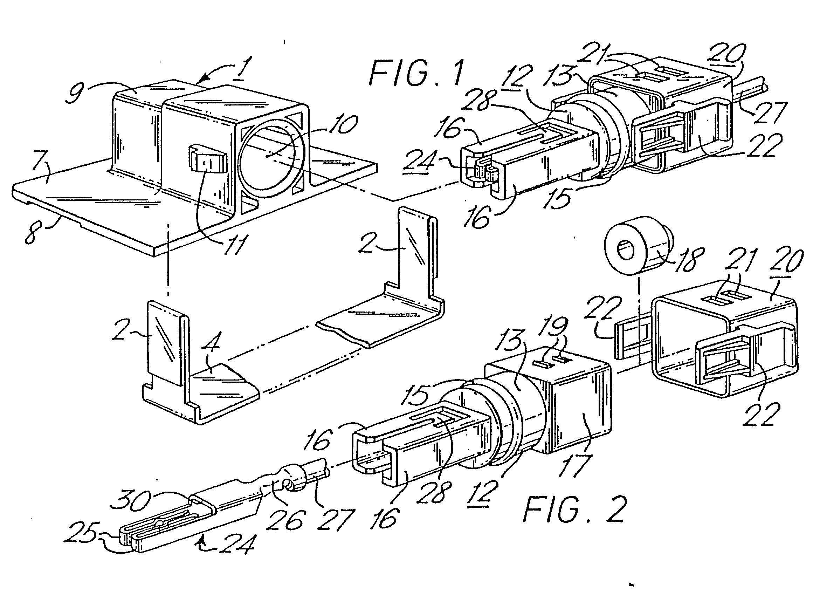

The assembly shown in Figures 1 to 3 comprises an insulating receptacle housing 1 for mounting over a male tab terminal 2 on a photovoltaic generator panel 3 of known construction. The tab terminal 2 is part of a bus strip 4 which interconnects conductors 5 in the panel 3, the tap terminal 2 projecting through an insulating cover 6 of the panel 3.

The housing 1 has a planar base 7 by which the housing 1 is secured to the panel 3 by means of an adhesive, the base 7 being formed with a groove 8 to receive any bulge in the cover 6 of the panel 3 caused by the bus strip 4. The base 7 is integrally formed with a hollow body portion 9 of substantially square external cross-section and having a blind circular cross-section cavity 10 therein, the axis of the cavity 10 being parallel to the plane of the base 7. The opposite side walls of the body portion 9 carry latching projections 11. A slot 14 passes through the base 7 into the cavity 10, which slot receives the male tab 2 when the housing 1 is mounted on the panel 3.

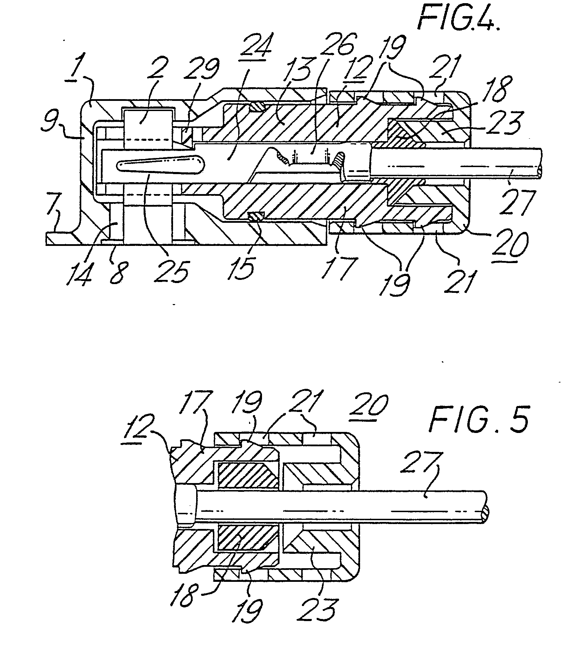

The assembly also includes a plug member comprising an insulating housing 12 having a circular outside cross-section portion 13 for receipt in the cavity 10 of the housing 1. The portion 13 is formed with an annular groove in which a resilient O-ring 15 is seated, which O-ring 15 provides sealing between the housing 1 and the plug member when mated therewith, as shown in Figure 4. Integrally formed at one end of the housing portion 13 are a pair of terminal-embracing arms 16, and at the other end the housing portion 13 is formed with a substantially square outside cross-section portion 17 having a passage therein. Received in an enlarged circular cross-section free end portion of the passage in the body portion 17 is an annular resilient sealing member 18, the outwardly directed end of which has the form of a truncated cone. A pair of opposite side walls of the body portion 17 are each formed with a pair of axially spaced latching projections 19. The plug member also comprises a hollow cap member 20 of substantially square inside and outside cross-section and sized to be mounted over the body portion 17 of the housing 12. A pair of opposed side walls of the cam member 20 are each formed with a pair of axially spaced holes 21 which co-operate with the latching projections 19 on the body portion 17 to determine two positions of latching of the cap member 20 to the housing 12, as will be described later. The other pair of opposed side walls of the cap member 20 are each formed with a latch arm 22 pivotally mounted near its centre on the cap member 20 and having an apertured end projecting beyond the open end of the cap member 20 for co-operation with a latching projection 11 on the receptacle housing 1 to latch the plug member in the mated condition with the receptacle housing 1, in known manner. Internally on its end wall the cap member 20 is formed with an annular boss 23 (see Figures 4 and 5) the hole in which passes through the end wall of the cap member, and the inner end of the hole in which is flared to receive the truncated conical end of the sealing member 18.

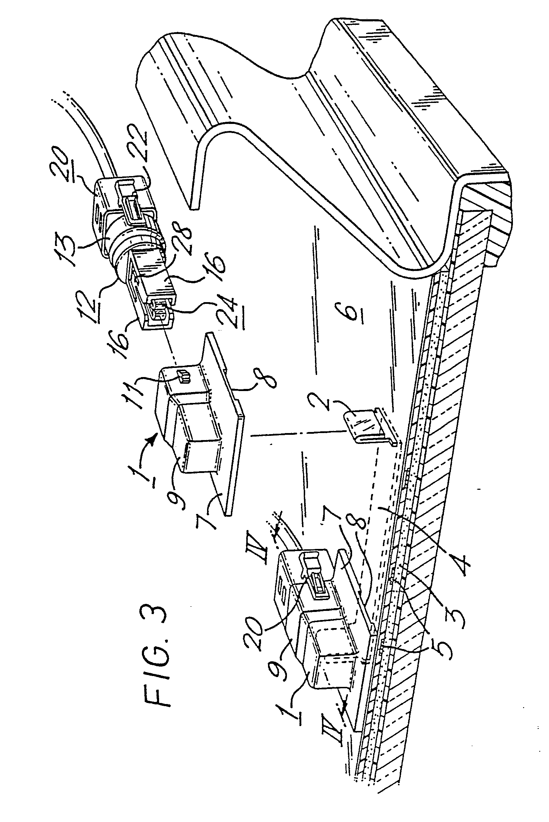

The assembly is completed by a receptacle terminal 24 having a pair of reversely bent arms 25 together defining a receptacle for a male tab 2 and integrally formed with a conventional crimping ferrule portion 26 shown crimped to the core and insulation of an insulated conductor 27, in known manner. In the assembled states of the plug member the receptacle terminal's arms 25 are received between the arms 16 of the housing 12 (see Figures 1 and 3) while the crimping ferrule portion 26 is received in the body portion 13 of the housing 12 (see Figure 4).

For assembly, the sealing member 18 is inserted in the body portion 17 of the housing 12 and the cap member 20 then latched to the housing 12 by engaging only one of the holes 21 on each side of the cap member 20 with a latching projection 19 on the body portion 17 of the housing 12. In this position the cap member 20 does not engage the sealing member 18 which is therefore uncompressed. An end of the conductor 27 can thus be freely passed from the cap member end through the plug member and the sealing member 18 therein, and the receptacle terminal 24 then crimped to the end of the conductor 27. The conductor 27 is then pulled back until the receptacle terminal 24 is correctly positioned in the housing 12. In this condition of the assembly the arms 25 of the receptacle terminal 24 are received between, and thus shrouded by, the arms 16 of the housing 12. The arms 16 are joined on one side by a U-shaped resilient portion 28 the bight of which has an inwardly directed projection 29 (see Figure 4) which engages in front of an outwardly directed edge 30 (see Figure 2) of the receptacle terminal 24 to secure the receptacle terminal 24 in the housing 12. The assembly is then as shown in Figure 5. The cap member 20 is then pushed further on to the housing 12 until both holes 21 on each side thereof are engaged with a latching projection 19 on the body portion 17 of the housing 12. This action causes the internal boss 23 on the cap member 20 to engage the sealing member 18 and compress it in the body portion 17, the sealing member 18 thus becoming compressed to grip the conductor 27, and providing sealing between the conductor 27 and the cap member 20 and housing 12, as shown in Figure 4. The plug member is then as shown in Figures 1 and 3 and can be mated with the receptacle housing 1 which has been mounted over a male tab 2 on the panel 3, to provide an electrical connector between the conductor 27 and the male tab 2, as required.

The assembly described above when assembled as shown to the left in Figure 3, has the advantage that it is totally environmentally sealed by the sealing member 18, the O-ring 15, and the adhesive securing the housing 1 to the panel 3, such sealing being essential due to the normal location of the panel 3. Further, the arms 16 of the housing 12, as described, shroud the terminal 24 and thus prevent accidental manual contact with the terminal 24 when the plug member is being unmated from the housing 1, thus being advantageous since the male tabs 2 on the panel 3 are normally permanently live, and thus any contact with the receptacle terminal 24 while still in contact with the male tab 2 could result in an electric shock. A further advantage is that this sealing and shrouding are provided in an assembly having only three normally separate parts, namely the housing 1, the terminal 24, and the plug member having the sealing member 18 and the cap member 20 secured thereto, while still allowing for easy assembly of the plug member and terminal 24 to the conductor 27.

**Claims**

1. An electrical connector assembly, for use in establishing an electrical connection to a photovoltaic generator panel (3), comprising an insulating receptacle housing (1) for mounting over a male terminal (2) on the panel (3); an insulating plug housing (12) matable with the receptacle housing (1); a terminal (24) receivable in the housing (12) with a conductor (27) connected to the terminal (24) extending out of the housing (12); a sealing member (18) locatable within the housing (12) with a conductor (27) connected to the terminal (24) received in the housing (12) passing therethrough; and a cap member (20) having latching means (21) co-operable with complementary latching means (19) on the housing (12) to latch the cap member (20) to the housing (12), to retain the sealing member in the housing (12), the latching means (19, 21) serving to latch the cap member (20) to the housing (12) either such that the sealing member (18) is uncompressed and the conductor (27) passes freely through the sealing member (18), or such that the sealing member (18) is compressed between the cap member (20) and the housing (12) and into sealing engagement with the conductor (27), the latching means (19, 21) being operable to secure the cap member (20) to the housing (12) in either a first predetermined position (Figure 5) in which the sealing member (18) is uncompressed, or a second predetermined position (Figure 4) in which the sealing member (18) is compressed, the cap member (20) being movable between the first and second positions by movement axially of the housing (12) relative to the housing (12), characterised in that the plug housing (12) has a pair of arms (16) which shroud a receptacle portion (25) of the terminal (24) received in the plug housing (12), sealing means (15) is provided between the receptacle and plug housings (1, 12) and operative when mated, and the cap member (20) and latching means (19, 21) are operable between the first and second position by movement of the cap member axially and without rotation relative to the housing (12).

2. A connector assembly as claimed in claim 1, characterised in that the latching means comprises a pair of axially spaced latching projections (19) on each of two opposite sides of the housing (12) and a pair of axially spaced holes (21) on each of two opposite sides of the cap member (20).

**Patentansprüche**

1. Elektrischer Verbinderaufbau zur Herstellung einer elektrischen Verbindung mit einem photoelektrischen Generatorpaneel (3), mit einem isolierenden Buchsengehäuse (1) zur Montage über einem eindringenden Anschluß (2) auf dem Paneel (3); einem isolierenden Steckergehäuse (12), das mit dem Buchsengehäuse (1) zusammenpaßbar ist; einem in dem Gehäuse (12) aufnehmbaren Anschluß (24), wobei ein Leiter (27) mit dem Anschluß (24) verbunden ist und sich aus dem Gehäuse (12) herauserstreckt; mit einem Dichtelement (18) das innerhalb des Gehäuses (12) angeordnet werden kann, wobei ein Leiter (27) mit dem in dem Gehäuse (12) aufgenommenen Anschluß (24) verbunden ist und durch dieses hindurch verläuft; und mit einem Kappenelement (20), welches Verriegelungseinrichtungen (21) aufweist, die mit komplementären Verriegelungseinrichtungen (19) an dem Gehäuse (12) zusammenwirken können, um das Kappenelement (20) mit dem Gehäuse (12) zu verriegeln und um das Dichtelement in dem Gehäuse (12) zu halten, wobei die Verriegelungseinrichtungen (19, 21) zur Verriegelung des Kappenelements (20) am Gehäuse (12) dienen, und zwar entweder derart, daß das Dichtelement (18) unkomprimiert ist und der Leiter (27) frei durch das Dichtelement (18) hindurch verläuft, oder derart, daß das Dichtelement (18) zwischen dem Kappenelement (20) und dem Gehäuse (12) komprimiert ist und in dichtenden Eingriff mit dem Leiter (27) gedrückt ist, wobei ferner die Verriegelungseinrichtungen (19, 21) derart betätigbar sind, daß sie das Kappenelement (20) am Gehäuse (12) befestigen, und zwar entweder in einer ersten vorbestimmten Position (Fig. 5), in welcher das Dichtelement (18) unkomprimiert ist, oder in einer zweiten vorbestimmten Position (Fig. 4), in welcher das Dichtelement (18) komprimiert ist, und wobei das Kappenelement (20) zwischen der ersten und der zweiten Position durch Bewegung axial zum Gehäuse (12) relativ zum Gehäuse (12) bewegbar ist, dadurch gekennzeichnet, daß das Steckergehäuse (12) ein Paar von Armen (16) aufweist, welche einen Buchsenabschnitt (25) des Anschlusses (24) abschirmen, der in dem Steckergehäuse (12) aufgenommen ist, daß Dichteinrichtungen (15) zwischen dem Buchsen- und Steckergehäuse (1, 12) vorgesehen und im zusammmgepaßten Zustand wirksam sind, und daß das Kappenelement (20) und die Verriegelungseinrichtungen (19, 21) durch Bewegung des Kappenelements axial und ohne Drehung relativ zum Gehäuse (12) zwischen der ersten und der zweiten Position betätigbar sind.

2. Verbinderaufbau nach Anspruch 1, dadurch gekennzeichnet, daß die Verriegelungseinrichtungen ein Paar von axial beabstandeten Verriegelungsvorsprüngen (19) an jeder der beiden gegenüberliegenden Seiten des Gehäuses (12) umfassen, sowie ein Paar von axial beabstandeten Löchern (21) an jeder der beiden gegenüberliegenden Seiten des Kappenelements (20).

## Revendications

1. Assemblage d'un connecteur électrique, destinè à être utilisé pour établir une connexion électrique sur un panneau (3) de générateurs photovoltaïques, comprenant un boîtier femelle isolant (1) destiné à être monté sur une borne mâle (2) portée par le panneau (3); un boîtier mâle isolant (12) pouvant être accouplé avec le boîtier femelle (1); une borne (24) pouvant être logée dans le boîtier (12), un conducteur (27) connecté à la borne (24) sortant du boîtier (12); un élément (18) d'étanchéité pouvant être logé dans le boîtier (12) et traversé par un conducteur (27) connecté à la borne (24) logée dans le boîtier (12); et un capuchon (20) comportant des moyens (21) de verrouillage pouvant coopérer avec des moyens complémentaires (19) de verrouillage situés sur le boîtier (12) pour verrouiller le capuchon (20) au boîtier (12), afin de retenir l'élément d'étanchéité dans le boîtier (12), les moyens de verrouillage (19, 21) servant à verrouiller le capuchon (20) sur le boîtier (12) soit de manière que l'élément (18) d'étanchéité ne soit pas comprimè et le conducteur (27) passe librement à travers l'élément (18) d'étanchéité, soit de manière que l'élément (18) d'étanchéité soit comprimé entre le capuchon (20) et le boîtier (12) et en contact étanche avec le conducteur (27), les moyens de verrouillage (19, 21) pouvant être manoeuvrés pour fixer le capuchon (20) sur le boîtier (12) soit dans une première position prédéterminée (figure 5) dans laquelle l'élément (18) d'étanchéité n'est pas comprimé, soit dans une seconde position prédéterminée (figure 4) dans laquelle l'élément (18) d'étanchéité est comprimé, le capuchon (20) étant mobile entre les première et seconde positions par mouvement axial du boîtier (12) par rapport au boîtier (12), caractérisé en ce que le boîtier mâle (12) comporte deux bras (16) qui enveloppent une partie femelle (25) de la borne (24) logée dans le boîtier mâle (12), des moyens d'étanchéité (15) sont prévus entre les boîtiers femelle et mâle (1, 12) et interviennent lorsque les boîtiers sont accouplés, et le capuchon (20) et les moyens de verrouillage (19, 21) peuvent être manoeuvrés entre les première et seconde positions par mouvement du capuchon axialement et sans rotation par rapport au boîtier (12).

2. Assemblage de connecteur selon la revendication 1, caractérisé en ce que les moyens de verrouillage comprennent deux saillies de verrouillage (19) espacées axialement, situées sur chacun de deux côtés opposés du boîtier (12) et deux trous (21), espacés axialement, situés sur chacun de deux côtés opposés du capuchon (20).

FIG. 1

FIG. 2

0 033 031

FIG. 3

FIG.4.

FIG.5